# EUROPEAN PATENT APPLICATION

(11) **EP 3 085 954 A1**
(43) Date of publication of application: **26.10.2016**
(21) Application number: 13899835.6
(22) Date of filing: 17.12.2013
(51) Int. Cl.: F03D 3/04, F03D 3/02, F03D 9/00

(54) **WIND POWER GENERATING UNIT AND VERTICALLY STACKED WIND POWER GENERATION SYSTEM**

(71) Applicant: Sung Jin Aero Co., Ltd., Incheon 400-103 (KR)
(72) Inventor: KWAK, Seung Ryeol, Incheon 406-764 (KR); JEONG, Kwang-Sup, Seoul 135-788 (KR); KIM, Chul Ho, Seoul 139-804 (KR); LEE, Sung Woon, Incheon 403-905 (KR)
(74) Representative: Zardi, Marco
(86) International application number: PCT/KR2013/011718
(87) International publication number: WO 2015/093641

(57) **Abstract**

There are provided a wind power generation unit and a vertically stacked wind power generation system including: a housing including an upper plate and a lower plate; impellers arranged to be rotatable between the upper plate and the lower plate and rotated by a flow of air introduced between the upper plate and the lower plate; and a generator interlocked with rotation of the impellers and configured to generate electricity according to the rotation of the impellers.

## Description

### [Technical Field]

The present invention relates to a wind power generation unit and a vertically stacked wind power generation system.

### [Background Art]

Generally, in order to solve the global warming problem caused by use of fossil fuels, the whole world actively tries to expand the supply of renewable energy.

As one of new renewable energy resources, wind energy has attracted attention. However, the wind energy has a problem that a density is low and the direction and the speed of wind frequently change. Further, continuity of wind is low. Thus, the operation rate of the existing axial-flow wind turbines currently used is as low as 30% or less.

With a suggestion of solutions for the problems of the existing axial-flow wind turbine, i.e. wind direction, wind speed, continuity of wind, and the like, a study for improving the existing axial-flow wind turbine and further increasing the operation rate of the existing axial-flow wind turbine is needed.

### [Disclosure]

### [Technical Problem]

An object of the present invention is to provide a wind power generation unit and a vertically stacked wind power generation system capable of increasing the overall generator efficiency by improving at least one or more of wind direction, wind speed, and continuity of wind.

### [Technical Solution]

In order to achieve the above-described object, according to an aspect of the present invention, there is provided a wind power generation unit including: a housing including an upper plate and a lower plate; impellers arranged to be rotatable between the upper plate and the lower plate and rotated by a flow of air introduced between the upper plate and the lower plate; and a generator interlocked with rotation of the impellers and configured to generate electricity according to the rotation of the impellers.

Herein, the housing may further include fences arranged between the upper plate and the lower plate and extended from outer peripheral portions of the upper plate and the lower plate toward the impellers.

Herein, the wind power generation unit may further include guide vanes respectively positioned between the fences and the impellers and bent in an opposite direction to a bending direction of blades of the impellers.

Herein, the impellers, the guide vanes, and the fences may be provided in multiple, and a circle formed by the multiple impellers, a circle formed by the multiple guide vanes, and a circle formed by the multiple fences may be in a concentric relationship with one another.

Herein, the number of the guide vanes may be 24.

Herein, a gap between the guide vane and the impeller may be 0.15 m.

Herein, the impellers may be of a cross-flow type.

Herein, the wind power generation unit may further include guide vanes arranged between the upper plate and the lower plate and bent and extended from outer peripheral portions of the upper plate and the lower plate toward the impellers.

According to another aspect of the present invention, there is provided a vertically stacked wind power generation system including: a driving unit configured to generate rotatory power by a flow of air; and a generator configured to receive the rotatory power from the driving unit and generate electricity, wherein the driving unit includes: a housing including an upper plate and a lower plate forming an inner space; and impellers arranged to be rotatable within the inner space and configured to generate the rotatory power by a flow of air introduced into the inner space, the housing includes multiple inner spaces stacked along a direction from the lower plate toward the upper plate, and the impellers may be provided in multiple to be respectively arranged within the multiple inner spaces.

### [Advantageous Effects]

According to the invention, wind power generation unit and vertically stacked wind power generation system can increase the overall generator efficiency by improving at least one or more of wind direction, wind speed, and continuity of wind.

### [Description of Drawings]

FIG. 1 is a perspective view illustrating an installation state of a vertically stacked wind power generation system 100 according to an exemplary embodiment of the present invention;
FIG. 2 is a conceptual diagram illustrating a configuration of a wind power generation unit 200 constituting a part of the vertically stacked wind power generation system 100 of FIG. 1;
FIG. 3 is a perspective view illustrating a configuration of the wind power generation unit 200 of FIG. 2 in detail except a generator 250;
FIG. 4 is a plane view illustrating an impeller 230 and a guide vane 270 of FIG. 3;
FIG. 5 is a transversal cross-sectional view illustrating a configuration of a wind power generation unit 300 according to another exemplary embodiment of the present invention;
FIG. 6 is a graph illustrating a maximum static pressure depending on the number of blades of an impeller.

### [Best Mode]

Hereinafter, a wind power generation unit and a vertically stacked power generation system according to exemplary embodiments of the present invention will be described in detail with reference to the accompanying drawings. In the present specification, like or similar components in different exemplary embodiments will be assigned like or similar reference numerals, and explanation thereof will be substituted with the first explanation.

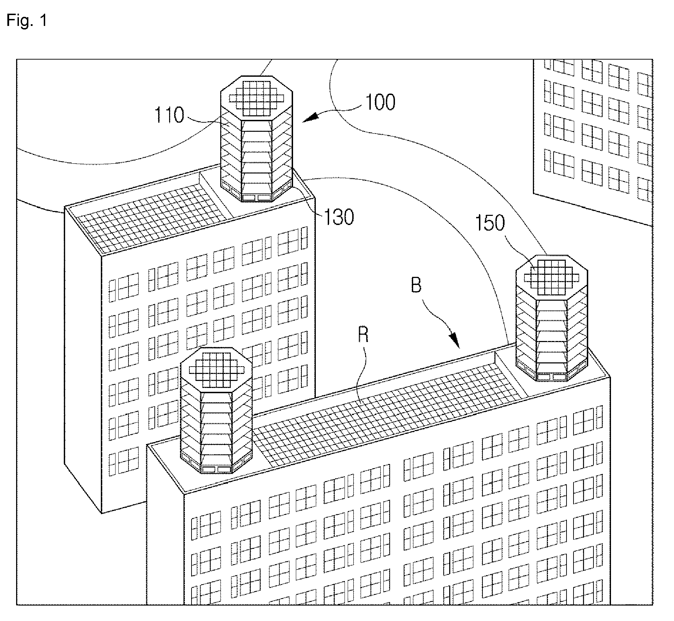

FIG. 1 is a perspective view illustrating an installation state of a vertically stacked wind power generation system 100 according to an exemplary embodiment of the present invention.

Referring to FIG. 1, the vertically stacked wind power generation system 100 may include a driving unit 110, a generator 130, and an adjunct 150.

The driving unit 110 is configured to receive wind and generate rotatory power. The driving unit 110 may be formed into a single layer, or may be stacked so as to be formed into multiple layers as described in the present exemplary embodiment.

The generator 130 is configured to receive the rotatory power generated by the driving unit 110 and generate electricity. The generator 130 may be positioned under the driving unit 110.

The adjunct 150 is installed at an available space on an upper surface of the driving unit 110, and may be, for example, a solar cell module.

With this configuration, the vertically stacked wind power generation system 100 can be installed at an unused space in a downtown area, such as a rooftop R of a building B. Otherwise, the vertically stacked wind power generation system 100 can be installed at an open portion on a middle floor of the building B. Since strong wind blows between buildings due to the high-rise buildings B, such a position may be effective for the vertically stacked wind power generation system 100 in generating electricity. Further, the vertically stacked wind power generation system 100 can be installed at a barge so as to be positioned on the sea as well as the building B on land.

In this case, although there is the single generator 130, the driving unit 110 is formed into multiple layers. Therefore, driving efficiency of the driving unit 110 is not much decreased by a change in amount of wind depending on a height of the rooftop R. Therefore, it is possible to improve continuity of wind and thus possible to increase generator efficiency as compared with a wind power generator simply relying on a single propeller only.

Further, with the solar cell module, it is possible to generate electricity caused by wind power and also possible to generate electricity caused by sunlight at the same time.

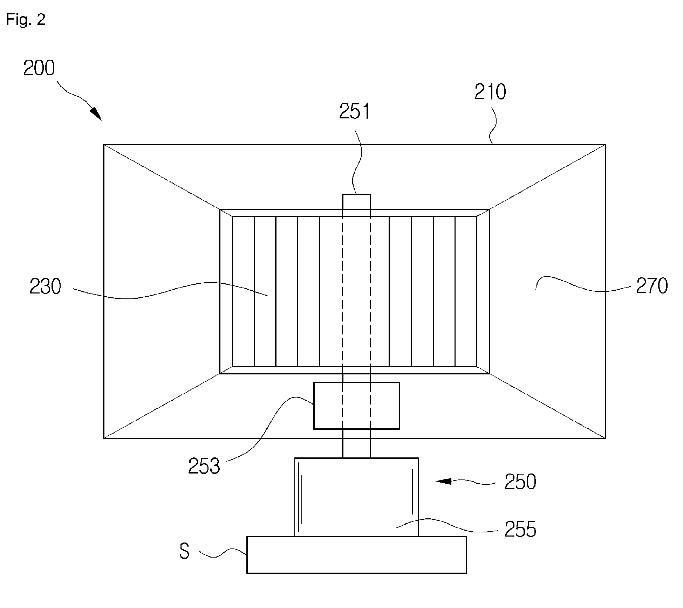

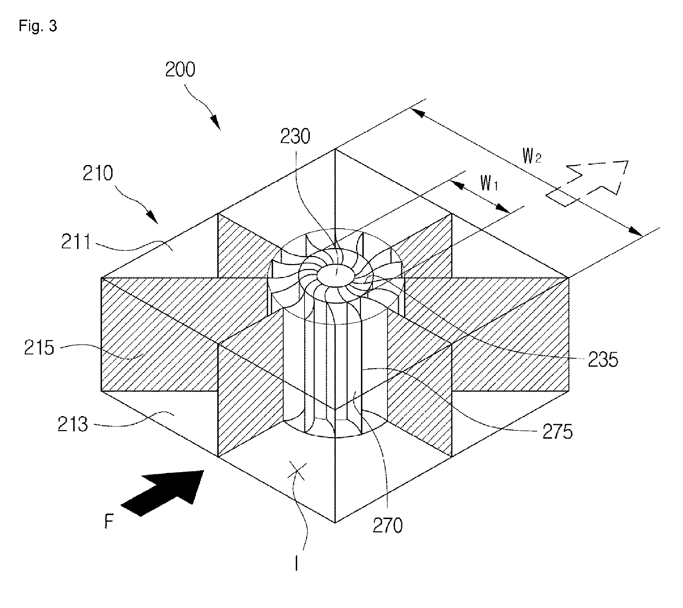

A wind power generation unit 200 used in the vertically stacked wind power generation system 100 will be explained with reference to FIG. 2 and FIG. 3.

FIG. 2 is a conceptual diagram illustrating a configuration of a wind power generation unit 200 constituting a part of the vertically stacked wind power generation system 100 of FIG. 1, and FIG. 3 is a perspective view illustrating a configuration of the wind power generation unit 200 of FIG. 2 in detail except a generator 250.

Referring to FIG. 2 and FIG. 3, the wind power generation unit 200 includes a single layer of the driving unit 110 and the generator 130 of the vertically stacked wind power generation system 100.

To be specific, the wind power generation unit 200 may include a housing 210, an impeller 230, a generator 250, and a guide vane 270.

The housing 210 is configured to form an inner space I where the impeller 230 and the guide vane 270 are positioned. To be specific, the housing 210 may include an upper plate 211, a lower plate 213, and a fence 215. Each of the upper plate 211 and the lower plate 213 is formed into a plate shape, and may have a square shape (FIG. 3), an octagonal shape (FIG. 1), or the like. The upper plate 211 and the lower plate 213 may have shapes corresponding to each other and are arranged to be spaced from each other in a height direction. The fence 215 may be arranged to be perpendicular to the upper plate 211 and the lower plate 213. A height of the fence 215 may be a distance between the upper plate 211 and the lower plate 213. The fence 215 may be provided in multiple and the multiple fences 215 may be arranged to head toward the centers of the upper plate 211 and the lower plate 213 from edge portions thereof, respectively.

The impeller 230 is positioned to be rotatable within the inner space I, and configured to be rotated by force of air introduced into the inner space I and generate rotatory power. The impeller 230 may be positioned at a central area of the inner space I. A central axis of rotation of the impeller 230 may be provided along a direction from the lower plate 213 toward the upper plate 211. A blade 235 of the impeller 230 may be provided in multiple.

The generator 250 is configured to be connected to the impeller 230 and generate electricity by the rotatory power generated by the impeller 230. The generator 250 may include a shaft 251, a transmission 253, and a generating unit 255. The shaft 251 is a rod connected to the rotation center of the impeller 230. The transmission 253 connects the shaft 251 to the generating unit 255. The generating unit 255 includes a coil therein and generates currents on the coil by electromagnetic induction while the shaft 251 is rotated. The generating unit 255 can be supported by a supporting table S. Herein, the generating unit 250 is on the whole the same as the generator 130 of the vertically stacked wind power generation system 100, but it is a part of the wind power generation unit 200 and thus denoted by reference numeral 250.

The guide vane 270 is configured to accelerate and guide air introduced into the inner space I toward the impeller 230. The guide vane 270 may be fixed at a position between the fence 215 and the impeller 230. In this case, the guide vane 270 includes multiple blades 275, and some of the blades 275 corresponding to the fences 215 may be connected to the fences 215. In this relationship, a circle formed by the multiple blades 275 may be positioned between a circle formed by the multiple fences 215 and a circle formed by the multiple blades 235 so as to be in a concentric relationship with one another.

With this configuration, in connection with a flow direction F of air with respect to the housing 210, a vertex flow phenomenon occurs on a rear side of the housing 210 rather than a front side of the housing 210. Thus, a pressure difference between the front side and the rear side is increased as compared with a case where the housing 210 is not provided. This provides an advantage that the impeller 230 is affected by air having a higher speed by increasing a flow rate of the air.

Also, the fence 215 (further, the guide vane 270) has a width W2 greater than a width W1 of the impeller 230, and, thus, can introduce air in a greater amount toward the impeller 230 as compared with a case where the impeller 230 itself is present. This provides an advantage that a flux of air toward the impeller 230 is increased.

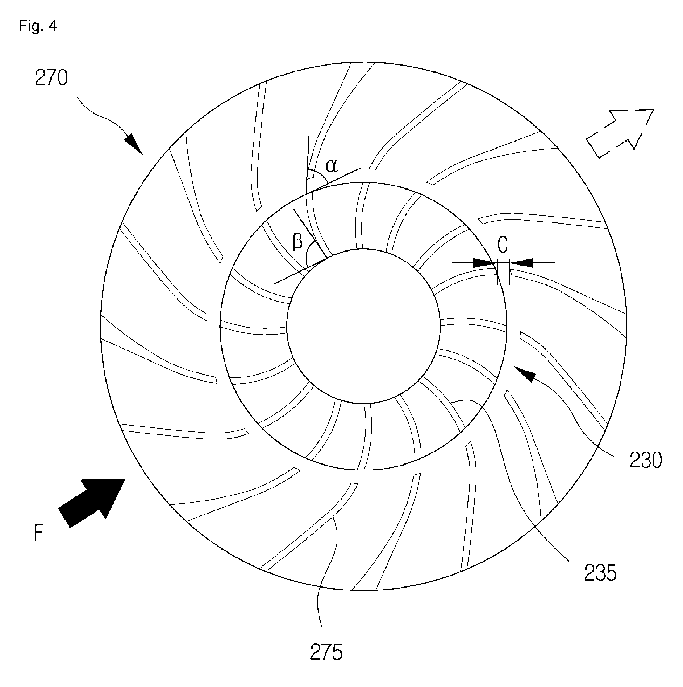

Hereinafter, a relationship between the impeller 230 and the guide vane 270 will be explained with reference to FIG. 4.

FIG. 4 is a plane view illustrating an impeller 230 and a guide vane 270 of FIG. 3. In FIG. 4, the blades 275 of the guide vane 270 are bent in the same direction as the blades 235 of the impeller 230 in the opposite form to that of FIG. 3.

Referring to FIG. 4, the impeller 230 is of a cross-flow type. Thus, along the flow direction F of air with respect to the impeller 230, air is introduced into the blades 235 on one side and discharged from the blades 235 on the opposite side. Such an impeller of a cross-flow type has an energy conversion efficiency of 35% or more, and, thus, is efficient as compared with an impeller of an axial-flow type having an energy conversion efficiency of 20%.

A shape of the blade 235 is determined by its inlet angle α and its outlet angle β. The inlet angle α is an angle between a tangent line of a circle connecting the outer sides of the blades 235 and an outward extension line of the blade 235. The outlet angle β is an angle between a tangent line of a circle connecting the inner sides of the blades 235 and an inward extension line of the blade 235. Herein, as the outlet angle β decreases, in other words, as the outlet angle β of the blade 235 is more deflected than the inlet angle α, generator efficiency is improved. However, if the outlet angle β is out of a certain range, the generator efficiency may be decreased due to delamination on a surface of the blade 235.

The guide vane 270 may include the blades 275 in the number corresponding to the number of the blades 235 of the impeller 230. Thus, air flowing between a pair of the adjacent blades 275 of the guide vane 270 is further accelerated and thus can be introduced between a pair of the corresponding blades 235 of the impeller 230.

A gap C between the blade 275 of the guide vane 270 and the blade 235 of the impeller 230 can be determined in order to maximize rotatory power of the impeller 230. This will be explained with reference to FIG. 10 and FIG. 11.

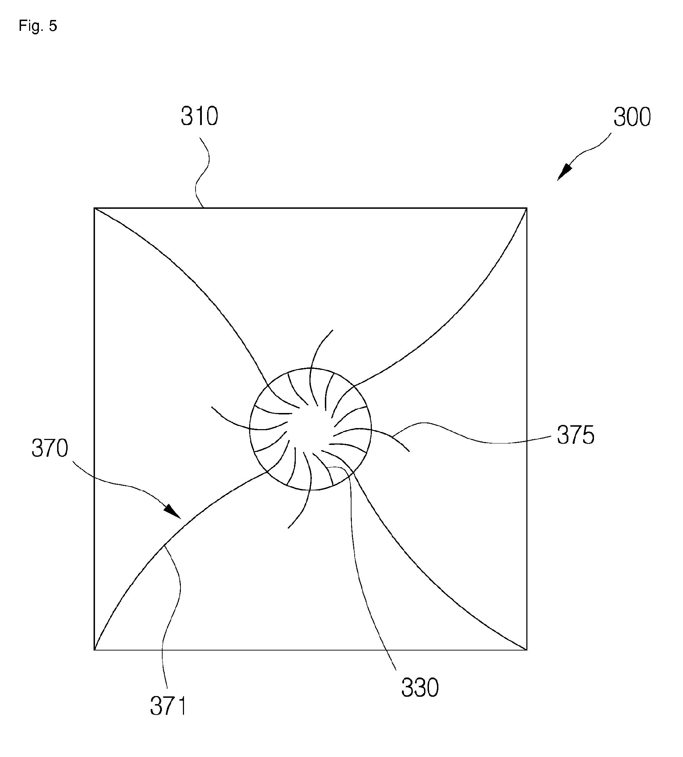

Hereinafter, a wind power generation unit 300 in another form will be explained with reference to FIG. 5.

FIG. 5 is a transversal cross-sectional view illustrating a configuration of a wind power generation unit 300 according to another exemplary embodiment of the present invention.

Referring to FIG. 5, the wind power generation unit 300 may include a housing 310, an impeller 330, a generator (refer to 250 in FIG. 2), and a guide vane 370.

Herein, the guide vane 370, more specifically, a first vane 371 is an integration of the fence 215 of the housing 210 and the guide vane 270 in the above-described exemplary embodiment. Thus, the first vane 371 is bent and extended from an edge portion of the housing 310. With this configuration, the first vane 371 deflects an angle of air flow from the edge portion of the housing 310. The first vane 371 is bent in an opposite direction to a bending direction of the impeller 330 and provides drag to the impeller 330.

Further, the guide vane 370 may include a second vane 375 positioned between the first vanes 371. Air introduced between the first vanes 371 is more precisely guided to the second vane 375 than to the impeller 330.

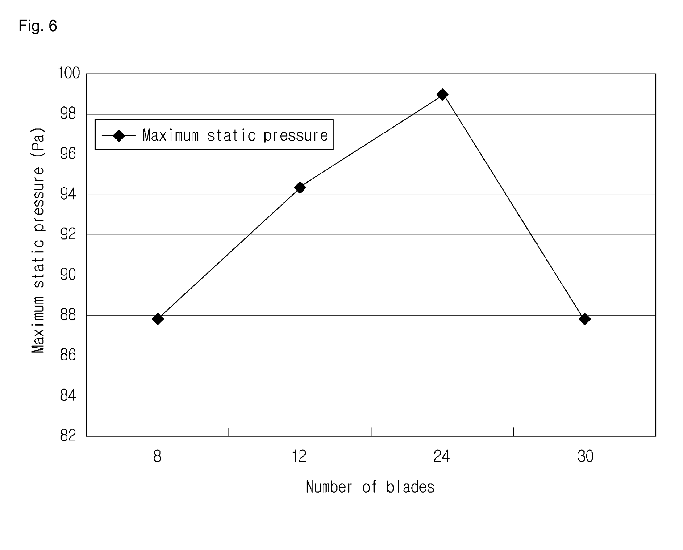

Hereinafter, a study on the optimum number of blades of the impeller 230 will be explained with reference to FIG. 6.

FIG. 6 provides images showing results of comparative experiments on a static pressure distribution depending on the number of blades of an impeller.

Referring to FIG. 6, under the conditions that a revolution per minute of the impeller 230 is 30 and a wind speed is 10 m/s, the experiments with different numbers of the blades 235 were conducted. To be specific, the numbers of the blades 235 were 8, 12, 24, and 30.

As can be seen from FIG. 6, as the number of the blades 235 of the impeller 230 increases, the maximum static pressure increases only until the number of the blades 235 of the impeller 230 is 24. In other words, if the number of the blades 235 of the impeller 230 is 30, the maximum static pressure decreases. Therefore, when the number of the blades 235 of the impeller 230 is 24, the optimum efficiency can be achieved.

A gap between the impeller 230 and the guide vane 270 will be explained.

In experiments, a speed of inflow air is 10 m/s, a revolution per minute of the impeller 230 is 20, and the outlet angle β of the blade 235 of the impeller 230 is 85°. Further, the number of the blades 235 of the impeller 230 is 16, and the gap C is 0.1 m, 0.15 m, 0.2 m, or 0.5 m.

Through the experiments, it can be seen that as the gap C between the impeller 230 and the guide vane 270 increases, kinetic energy loss increases. Further, it can be seen that when the gap C is 0.15 m, the maximum static pressure is generated on an inlet side of the impeller 230.

The wind power generation unit and the vertically tacked wind power generation system described above are not limited to the configurations and the operation methods explained in the above exemplary embodiments. The above exemplary embodiments can be selectively combined in whole or in part so as to be modified in various ways.

## Claims

1. A wind power generation unit comprising:
a housing including an upper plate and a lower plate;
impellers arranged to be rotatable between the upper plate and the lower plate and rotated by a flow of air introduced between the upper plate and the lower plate; and
a generator interlocked with rotation of the impellers and configured to generate electricity according to the rotation of the impellers.

2. The wind power generation unit of claim 1, wherein the housing further includes fences arranged between the upper plate and the lower plate and extended from outer peripheral portions of the upper plate and the lower plate toward the impellers.

3. The wind power generation unit of claim 2, further comprising:
guide vanes respectively positioned between the fences and the impellers and bent in an opposite direction to a bending direction of blades of the impellers.

4. The wind power generation unit of claim 3, wherein the impellers, the guide vanes, and the fences are provided in multiple, and a circle formed by the multiple impellers, a circle formed by the multiple guide vanes, and a circle formed by the multiple fences are in a concentric relationship with one another.

5. The wind power generation unit of claim 4, wherein the number of the guide vanes is 24.

6. The wind power generation unit of claim 4, wherein a gap between the guide vane and the impeller is 0.15m.

7. The wind power generation unit of claim 1, wherein the impellers are of a cross-flow type.

8. The wind power generation unit of claim 1, further comprising:
guide vanes arranged between the upper plate and the lower plate and bent and extended from outer peripheral portions of the upper plate and the lower plate toward the impellers.

9. A vertically stacked wind power generation system comprising:
a driving unit configured to generate rotatory power by a flow of air; and
a generator configured to receive the rotatory power from the driving unit and generate electricity,
wherein the driving unit includes: a housing including an upper plate and a lower plate forming an inner space; and impellers arranged to be rotatable within the inner space and configured to generate the rotatory power by a flow of air introduced into the inner space,
the housing includes multiple inner spaces stacked along a direction from the lower plate toward the upper plate, and
the impellers are provided in multiple to be respectively arranged within the multiple inner spaces.
